# EUROPÄISCHE PATENTSCHRIFT

(11) **EP 2 697 569 B1**
(45) Veröffentlichungstag und Bekanntmachung des Hinweises auf die Patenterteilung: **12.07.2017**
(21) Anmeldenummer: 12712672.0
(22) Anmeldetag: 10.04.2012
(51) Int. Cl.: A47J 27/04, F24C 15/20, F24C 15/32

(54) **DAMPFGARGERÄT, INSBESONDERE DAMPFBACKOFEN**
STEAM COOKING APPLIANCE, IN PARTICULAR A STEAM OVEN
APPAREIL DE CUISSON À LA VAPEUR, EN PARTICULIER FOUR À VAPEUR

(30) Priorität: 15.04.2011 EP 11290209
(43) Veröffentlichungstag der Anmeldung: 19.02.2014
(73) Patentinhaber: BSH Hausgeräte GmbH, 81739 München (DE)
(72) Erfinder: HOFFMANN, Olivier, F-67120 Molsheim (FR); OUMGHARI, Radwane, F-67400 Illkirch (FR); SCHNEIDER, Matthieu. c/o Gaggenau Industrie S.A.S, F-67640 LIPSHEIM (FR)
(86) Internationale Anmeldenummer: PCT/EP2012/056432
(87) Internationale Veröffentlichungsnummer: WO 2012/140003

(56) Entgegenhaltungen:
- EP-A2- 1 321 082
- WO-A2-2009/043779
- CH-A1- 699 876
- DE-A1- 10 038 136
- DE-A1-102006 031 581
- DE-U1-202004 015 285

## Beschreibung

Die Erfindung betrifft ein Dampfgargerät, insbesondere einen Dampfbackofen.

Zum Garen von Nahrungsmitteln durch Dampf werden Dampfgargeräte, wie beispielsweise Dampfbacköfen verwendet. Ein solches Gargerät ist beispielsweise aus der EP 0233535 A2 bekannt. Dieses Gerät weist einen geschlossenen Garraum auf. An der Rückwand ist ein Schaufelrad gelagert, das von einer elektrischen Heizschlange umgeben ist. Von einer Wasserzufuhrleitung wird Wasser vom Schaufelrad über die Heizschlage verdampft. Am tiefsten Punkt des Garraumes befindet sich ein Ablauf für Kondenswasser.

Dampfgargeräte dieser Art werden in der Regel wie folgt betrieben. Soll in dem Garraum Dampf erzeugt werden, so muss der Garraum abgeschlossen sein, wodurch allerdings ein gewisser Überdruck in dem Garraum erzeugt wird. In der Regel ist an dem Garraum ein Verschluss vorgesehen, der in dem Zustand, in dem Dampf erzeugt werden soll, geschlossen ist. In diesem Zustand kann Dampf nur über eine Überlauföffnung aus dem Garraum entweichen. Solche Überlauföffnungen sind vorgesehen, um beispielsweise bei einem Verstopfen des Ablaufs für das Kondenswasser, dennoch ein zuverlässiges Entfernen des Kondenswassers aus dem Garraum gewährleisten zu können. Der über diese Überlauföffnung entweichende Dampf muss durch einen Wassertank, zu dem die Überlaufleitung, die mit der Überlauföffnung verbunden ist, führt, hindurch treten, bevor er über einen Dampfkamin aus dem Dampfgargerät entweichen kann.

In dem Zustand, in dem ohne Dampf gegart werden soll, oder zur Erneuerung der Luft in dem Garraum muss aber eine Belüftungsöffnung für Frischluft an den Garraum vorliegen. Die Belüftungsöffnung oder Frischluftöffnung ist in der Regel an der Oberseite des Garraums vorgesehen und wird durch eine anhebbare Metallplatte weitestgehend verschlossen, die bei Bedarf angehoben werden kann.

In der EP 1 321 082 A2 wird eine Vorrichtung zur Wärmebehandlung von Substanzen, insbesondere Nahrungsmitteln beschrieben. Die Vorrichtung weist eine außerhalb des Garraumes ausgebildete Kondensationseinrichtung auf. Die Kondensationseinrichtung umfasst eine Einlassöffnung, einen Kondensationsraum, der über eine Zuführleitung und eine Rückführleitung mit dem Garraum in Verbindung steht.

Insbesondere geht die Rückführleitung in eine Flüssigkeitsablaufleitung über, die in einen Kondensator mündet, der als Wassersperre dient. Aus dem Kondensator führt ein Kondensatabflussrohr heraus. Von dem Raum oberhalb der Wasserfüllung des Kondensators ist eine Abluftleitung vorgesehen. Ein Nachteil dieser Vorrichtung besteht darin, dass der Druck in dem Garraum durch die Eintauchtiefe der Flüssigkeitsablaufleitung in dem Kondensator eingestellt werden muss.

In der DE 10 2006 031 581 A1 ist weiterhin eine Vorrichtung zur Wärmebehandlung von Lebensmitteln mit Fettabtrennung beschrieben. Bei dieser Vorrichtung ist ein beheizbarer Garraum mit einem Ablaufkanal verbindbar. Zudem ist ein Bodenablauf des Garraums über eine Bypassleitung mit dem Abluftkanal verbindbar. Der Abluftkanal ist zu dem Garraum hin durch ein Abluftventil verschließbar. Zudem kann in der Bypassleitung ein weiteres Ventil vorgesehen sein, über das die Bypassleitung geschlossen werden kann. Der Druck in dem Garraum wird durch das Abluftventil eingestellt. In der CH 699 876 A1 ist ein Gerät zum Dampfgaren von Nahrungsmitteln beschrieben. Bei dem Gerät ist in einem Gehäuse ein Dampfkondensator angeordnet, der über eine Leitung mit einem Abdampfventil verbunden ist. Eine Abdampfleitung ist über die Leitung mit dem Dampfkondensator und über diesen mit dem Garraum verbunden. Durch Öffnen des Abdampfventils kann sich daher kein Überdruck in dem Garraum bilden. Weiterer relevanter Stand der Technik ist in den Dokumenten DE 100 38 136 und DE 20 2004 015285 zu finden.
Ein Nachteil der bekannten Gargeräte ist, dass die Einstellung eines gewünschten Drucks in dem Garraum nicht gezielt gesteuert beziehungsweise geregelt werden kann.
Aufgabe der vorliegenden Erfindung ist es daher, ein Dampfgargerät zu schaffen, das zumindest diesen Nachteil beseitigt.

Erfindungsgemäß wird die Aufgabe daher gelöst durch ein Dampfgargerät, insbesondere einen Dampfbackofen, mit einem Garraum, der in mindestens einer der Seitenwände mindestens eine Überlauföffnung aufweist. Das Gargerät ist dadurch gekennzeichnet, dass die Überlauföffnung mit einer Überlaufleitung, die sich in einen Überlaufablauf und ein Dampfablassrohr verzweigt, verbunden ist und an dem Dampfablassrohr mindestens ein Dampfventil vorgesehen ist, mittels dessen zumindest zeitweise der Querschnitt des Dampfablassrohres verändert werden kann.

Als Dampfgargerät wird im Sinne dieser Erfindung vorzugsweise ein Dampfbackofen verstanden. Hierbei werden sowohl Dampfbacköfen verstanden, die einen Dampferzeuger aufweisen, der sich außerhalb des Garraumes befindet, als auch Dampferbacköfen, bei denen der Dampf in dem Garraum erzeugt wird. Letztere Art des Dampfbackofens umfasst sowohl Geräte, bei denen das Wasser für die Dampferzeugung über eine Wasserzufuhrleitung in den Garraum geleitet wird als auch Geräte, bei denen der Garraumboden als Wasserreservoir dient. Bei Geräten, bei denen der Boden als Wässerreservoir dient, ist dieser abgeschlossen. Bei den anderen Gerätevarianten ist im Boden vorzugsweise eine Wasserablauföffnung vorgesehen, über die Kondenswasser aus dem Garraum austreten kann und die auch als Siphon bezeichnet wird.

Der Garraum wird bei dem erfindungsgemäßen Dampfgargerät vorzugsweise durch eine sogenannte Garraummuffel oder Ofenmuffel und an der Vorderseite durch eine Ofentüre begrenzt. Die vertikalen Wände des Garraumes, insbesondere der Garraummuffel werden hierbei als Seitenwände bezeichnet, eine der Seitenwände stellt somit die Rückwand des Garraumes dar.

Die Überlauföffnung ist so in der mindestens einen Seitenwand angeordnet, dass deren Abstand zum Boden des Garraumes dem maximal zulässigen oder gewünschten Wasserstand auf dem Boden entspricht. Die Überlauföffnung befindet sich daher im unteren Bereich der Seitenwand des Garraumes, insbesondere der Ofenmuffel.

Die Überlaufleitung, die sich erfindungsgemäß an die Überlauföffnung anschließt, kann ein Rohr oder einen Schlauch darstellten. Indem sich die Überlaufleitung verzweigt, kann die Überlauföffnung bei dem erfindungsgemäßen Dampfgargerät für unterschiedliche Funktionen verwendet werden. Wasser, das über den maximalen Wasserstand hinaus in dem Garraum, insbesondere auf dem Boden vorliegt, kann über die Überlaufleitung zu dem Überlaufablauf gelangen. Der Überlaufablauf kann beispielsweise ein Rohr oder einen Schlauch darstellen, durch den das Wasser nach unten abfließt. Da an der Verzweigung aber zudem auch ein Dampfablassrohr vorgesehen ist, kann auch Dampf gezielt durch die Überlauföffnung aus dem Garraum entfernt werden oder entweichen.

Da bei der Erfindung der Dampf, der aus dem Garraum entfernt werden soll, unmittelbar von der Überlaufleitung in das Dampfablassrohr gelangt, steht dem Dampf kein Druck entgegen. Beim Stand der Technik hingegen, in dem der Dampf nur über einen Wassertank entweichen kann, muss in dem Garraum ein ausreichender Druck herrschen, um den Dampf gegen den Gegendruck des Wassers in den Wassertank und darüber in den Dampfkamin zu leiten. Somit ist es bei dem erfindungsgemäßen Dampfgargerät auch möglich Dampf aus dem Garraum zu entlassen, wenn der Überdruck in dem Garraum gering ist oder kein Überdruck vorliegt.

Zur Regelung des Dampfablasses, das heißt insbesondere zur Regelung des Dampfstroms in dem Dampfablassrohr, ist an dem Dampfablassrohr ein Dampfventil vorgesehen.

Als Dampfventil wird im Sinne der vorliegenden Erfindung eine Vorrichtung bezeichnet, mittels derer der Dampfstrom in dem Dampfablassrohr geregelt werden kann. Hierzu ist das Dampfventil so ausgelegt, dass der Querschnitt des Dampfablassrohres zumindest zeitweise verändert werden kann. Als Veränderung des Querschnitts wird vorzugsweise eine Verringerung der Querschnittsfläche des Dampfablassrohres verstanden. Hierdurch wird die Durchlassfläche beziehungsweise der Durchlassquerschnitt, über den Dampf durch das Dampfablassrohr strömen kann, zumindest im Bereich des Dampfventils verringert. Dadurch kann die Dampfmenge, die aus dem Garraum austreten kann, geregelt werden. Im Gegensatz zu Klappen oder Platten, bei denen keine Veränderung des Querschnitts sondern ein Verschließen und Öffnen des Rohrendes oder einer anderen Öffnung erfolgt, ist bei der erfindungsgemäß verwendeten Art des Dampfventils ein gezieltes Regeln des Dampfablasses zuverlässig möglich.

Die vorliegende Erfindung kombiniert somit das Verlagern des Dampfablasses an einen Ort, der vom Dampf ohne Gegendruck erreicht werden kann und der von dem Garraum beabstandet ist. Hierdurch wird es im Gegensatz zu einem an dem Garraum vorgesehenen Dampfablass, beispielsweise durch eine anhebbare Platte, möglich ein Dampfventil an dem Dampfablass auf einfache Weise anzubringen und dadurch eine Regelung des Dampfstroms beziehungsweise der Dampfmenge, die aus dem Garraum entfernt werden soll, zu ermöglichen.

Gemäß einer bevorzugten Ausführungsform ist das Dampfventil zu der Verzweigung der Überlaufleitung in Überlaufablauf und Dampfablassrohr beabstandet. Das Dampfventil kann beispielsweise an dem Ende des Dampfablassrohres liegen, über das Dampf das Gerät verlässt. Dieses Ende wird im Folgenden auch als Austrittsende bezeichnet. Erfindungsgemäß ist es aber bevorzugt, dass das Dampfventil in dem Bereich zwischen der Abzweigung und dem Austrittsende liegt. Das Austrittsende des Dampfablassrohres kann oberhalb des Garraums liegen. Durch die Anordnung des Dampfventils zwischen der Verzweigung und dem Austrittsende kann dieses beispielsweise im rückwärtigen Teil des Dampfgargerätes, insbesondere hinter der Garraummuffel, angeordnet werden. In diesem Bereich des Dampfgargerätes sind weitere Komponenten des Dampfgargerätes, wie beispielsweise der Wassertank für den Überlauf, vorgesehen, so dass zwischen der Rückseite der Garraummuffel und der Rückseite des Dampfgargerätes ein gewisser Abstand vorliegen muss. Dieser Abstand kann dann als Bauraum für die Anbringung des Dampfventils verwendet werden. Indem das Dampfventil zu der Verzweigung beabstandet angeordnet ist, kann unabhängig von dem Zustand des Dampfventils zudem stets ein zuverlässiger Abtransport von überschüssigem Wasser aus dem Garraum gewährleistet werden, das über die Überlauföffnung austritt.

Vorzugweise wird das Dampfablassrohr zumindest im Bereich des mindestens einen Dampfventils durch einen Schlauch gebildet. Als Schlauch wird ein rohrförmiger Körper verstanden, der aus flexiblem Material besteht. Beispielsweise kann ein Silikonschlauch eingesetzt werden. Das Dampfablassrohr kann vollständig aus einem Schlauch bestehen. Das bedeutet, dass die gesamte Strecke von der Verzweigung bis zu dem Austrittsende durch einen Schlauch gebildet ist. Es ist aber auch möglich das Dampfablassrohr über Bereiche durch Rohre, beispielsweise Metallrohre oder Kunststoffrohre zu bilden und lediglich in dem Bereich des Dampfventils ein Schlauchstück einzusetzen, beispielsweise unter Verwendung von Schlauchschellen oder andere Schlauchverbinder. Indem das Dampfablassrohr in dem Bereich des Dampfventils durch einen Schlauch gebildet ist, kann die Querschnittsveränderung in diesem Bereich durch Verformen des Schlauches vorgenommen werden. Das Vorsehen separater Einrichtungen, die sich beispielsweise in den Querschnitt des Rohres erstrecken, ist hierbei nicht erforderlich. Der Aufbau des Dampfventils ist daher einfach.

Vorzugsweise wirkt das Dampfventil von außen auf das Dampfablassrohr. Besonders bei einem Dampfablassrohr, das im Bereich des Dampfventils aus einem Schlauch besteht, wirkt das Dampfventil vorzugsweise in mindestens einer radialen Richtung auf den Schlauch ein. Indem das Dampfventil von außen auf den Schlauch wirkt, kann ein Strömungsverlust, der bei in dem Rohr angeordneten Verschließelementen auch im geöffneten Zustand des Ventils zu erwarten wäre, vermieden werden. Das erfindungsgemäße Dampfventil kann auch als Quetschventil bezeichnet werden. Zudem ist eine Anordnung des Ventils außerhalb des Dampfablassrohres auch aus Wartungsgründen von Vorteil, da auf das Ventil einfach zugegriffen werden kann und erforderliche Arbeiten durchgeführt werden können, ohne das Dampfablassrohr beschädigen, insbesondere öffnen, zu müssen.

Das Dampfventil kann eine mechanische Betätigungsvorrichtung umfassen. Als mechanische Betätigungsvorrichtung wird eine Betätigungsvorrichtung verstanden, die zumindest teilweise mechanisch verschoben oder bewegt wird und dadurch auf den Querschnitt des Dampfablassrohres einwirkt. Die Verwendung einer mechanischen Betätigungsvorrichtung ist vorteilhaft, da durch einen solchen Betätigungsvorrichtung große Kräfte aufgebracht werden können und somit beispielsweise ein Schlauch zuverlässig verformt, insbesondere zusammengedrückt werden kann.

Vorzugsweise umfasst das Dampfventil ein Stellglied, insbesondere einen elektromagnetischen oder elektrischen Aktuator oder einen Thermoaktuator. Als elektromagnetischer oder elektrischer Aktuator wird hierbei ein Aktuator bezeichnet, bei dem ein Teil des Dampfventils, insbesondere die Betätigungsvorrichtung, durch elektromagnetischen beziehungsweise elektrischen Antrieb bewegt wird. Als Thermoaktuator wird ein Aktuator bezeichnet, bei dem ein Teil des Dampfventils durch Ausdehnen oder Zusammenziehen eines Materials aufgrund von Temperaturänderungen bewegt wird. Besonders bevorzugt wird ein Thermoaktuator verwendet, in dem eine Wachsmasse vorgesehen ist, die sich je nach herrschender Temperatur ausdehnt oder zusammenzieht und dadurch einen Teil des Dampfventils bewegt, insbesondere verschiebt. Die Verwendung eines solchen Thermoaktuators weist den Vorteil auf, dass durch diesen hohe Kräfte aufgebracht werden können. Zudem sind die Kosten für einen solchen Thermoaktuator gering. Die Verwendung eines Thermoaktuators ist bei der vorliegenden Erfindung trotz des relativ trägen Ansprechens des Aktuators möglich, da durch den erfindungsgemäßen Aufbau eine Gefahr durch Überdruck in dem Garraum nicht besteht. Ist das Dampfventil geschlossen und kann nicht schnell genug oder weit genug geöffnet werden, kann Dampf über den Überlaufablauf entweichen.

Vorzugsweise ist an dem Garraum mindestens ein Belüftungsventil angeordnet, das zu der Überlauföffnung beabstandet ist. Durch das Vorsehen eines Belüftungsventils, das auch als Frischluftventil bezeichnet werden kann, wird es möglich, gezielt Frischluft in den Garraum einzubringen. Indem das Belüftungsventil eine separate Vorrichtung zu dem Dampfventil darstellt, können diese unterschiedlich angesteuert werden und so unterschiedliche Bedingungen in dem Garraum eingestellt werden. Zusätzlich liegt das Belüftungsventil und damit auch die für die Belüftung vorgesehene Belüftungsöffnung an einer Position in dem Garraum, die von der Überlauföffnung beabstandet ist. Beispielsweise kann die Belüftungsöffnung an der Oberseite des Garraumes, insbesondere der Garraummuffel, vorgesehen sein. Das Belüftungsventil ist dabei außerhalb des Garraumes an der Belüftungsöffnung angeordnet. Diese Position des Belüftungsventils beabstandet zu der Überlauföffnung ist besonders vorteilhaft, da dadurch beim Abkühlen des Garraumes eine gute Durchmischung der Luft erzielt werden kann. Bevor der Benutzer die Türe eines Dampfgargerätes öffnet, muss, insbesondere um Verbrennungen zu vermeiden, der Dampf im Garraum abgekühlt werden. Dies erfolgt in der Regel durch Einbringen von Frischwasser, wodurch der Dampf kondensiert. Bei dieser Kondensation und dem Abkühlen entsteht in dem Garraum allerdings ein Unterdruck. Durch das Vorsehen des Belüftungsventils beabstandet zu der Überlauföffnung kann dieser Unterdruck durch Einlass von Frischluft ausgeglichen werden. Gleichzeitig kann Dampf, der nicht kondensiert ist, über die Überlauföffnung zu dem Dampfablassrohr gelangen. In diesem Zustand ist dass Dampfventil vorzugsweise geöffnet, so dass der Dampf aus dem Gerät entfernt werden kann. Das Belüftungsventil bleibt bei dem erfindungsgemäßen Dampfgargerät vorzugsweise auch bei ausgeschaltetem Dampfgargerät offen, da dadurch eine Luftzirkulation in dem Garraum gewährleistet werden kann.

Gemäß einer Ausführungsform endet der Überlaufablauf in einem Wassertank. Durch diese Ausführungsform kann ein unerwünschtes Entweichen von Dampf während des Dampfgarvorgangs verhindert werden. Der Überdruck, der während des Garens in dem Garraum herrscht, ist relativ gering, so dass ein Entweichen von Dampf gegen den Druck des Wassers in dem Wassertank im Normalfall nicht auftritt. Somit wird bei dieser Ausführungsform des erfindungsgemäßen Dampfgargerätes zuverlässig Dampf über das Dampfablassrohr entfernt. Das Dampfablassrohr endet vorzugsweise oberhalb des Garraumes. Hierdurch kann der austretende Dampf einfach über Öffnungen in einer Gehäusewand an die Umgebung oder an ein Abzugsrohr abgegeben werden.

Gemäß einer bevorzugten Ausführungsform sind das Dampfventil und das Belüftungsventil mit einer Steuereinheit verbunden. Indem diese beiden Einrichtungen über eine einzige Steuereinheit angesteuert werden, können die Zustände aufeinander angepasst werden. Beispielsweise kann beim Abkühlen des Garraumes, dem sogenannten Kondensationsvorgang, das Belüftungsventil so eingestellt werden, dass hierüber Frischluft in den Garraum gelangen kann, während das Dampfventil leicht geöffnet sein kann, um das Entweichen von noch vorhandenem Dampf zu gewährleisten und eine Luftzirkulation in dem Garraum zu erzeugen.

Die Erfindung wird im Folgenden erneut unter Bezugnahme auf die beiliegenden Zeichnungen erläutert. Hierbei zeigen:
- Figur 1:: eine schematische Darstellung des Aufbaus eines Dampfgargerätes gemäß dem Stand der Technik;
- Figur 2:: eine schematische Darstellung des Aufbaus einer erfindungsgemäßen Ausführungsform der Erfindung eines Dampfgargerätes;
- Figur 3:: eine schematische, perspektivische Ansicht einer Ausführungsform des erfindungsgemäßen Dampfgargerätes;
- Figur 4:: eine schematische, perspektivische Ansicht einer erfindungsgemäßen Ausführungsform eines Dampfventils an einem Dampfablassrohr;
- Figur 5:: eine schematische Schnittansicht einer erfindungsgemäßen Ausführungsförm des Dampfventils an einem Dampfablassrohr; und
- Figur 6:: eine schematische, perspektivische Schnittansicht eines Belüftungsventils eines Dampfgargerätes nach einer Ausführungsform der vorliegenden Erfindung.

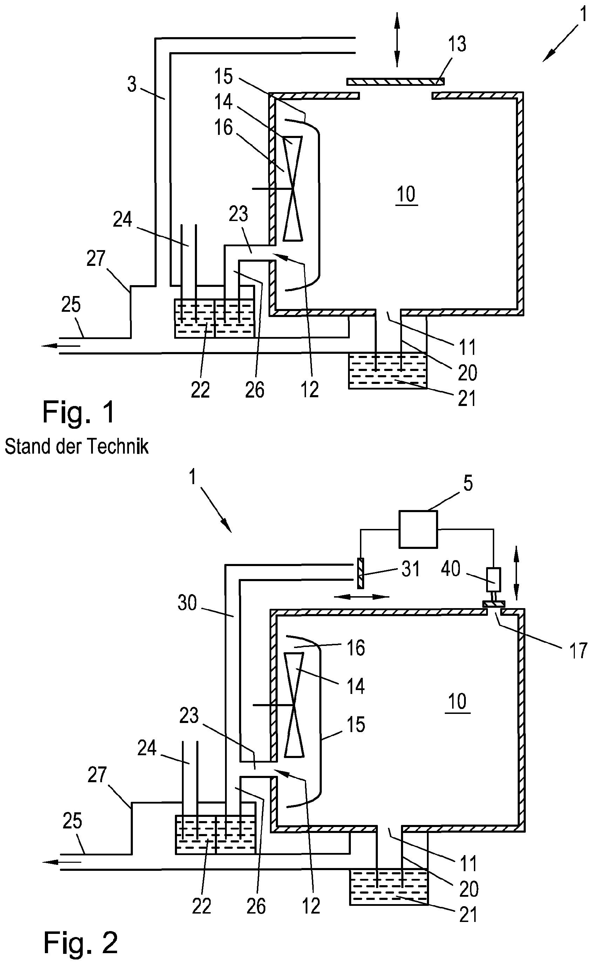

In Figur 1 ist eine Ausführungsform eines Dampfgargerätes 1 nach dem Stand der Technik gezeigt. Das Dampfgargerät 1 umfasst einen Garraum 10, der in der Regel von einer Garraummuffel gebildet wird und an der Vorderseite durch eine Türe (nicht gezeigt) verschlossen ist. An dem Boden des Garraumes 10 ist eine Wasserablauföffnung 11 vorgesehen, über die über ein Ablaufrohr 20 Kondenswasser aus dem Garraum 10 in einen Auffangbehälter 21 gelangen kann. An der Oberseite des Garraumes 10 ist eine anhebbare Metallplatte 13 vorgesehen, die über eine Dichtung eine Öffnung in der Oberseite des Garraumes 10 abdeckt. In der Metallklappe ist eine weitere, kleine Öffnung (nicht gezeigt) vorgesehen, die stets offen ist und über die somit Frischluft in den Garraum 10 eintreten kann. Im rückwärtigen Bereich des Garraums 10 ist ein Luftleitblech 15 vorgesehen, durch das ein Lüfterraum 16 abgetrennt wird. In dem Lüfterraum 16 ist ein Lüfter 14 angeordnet.

In der Rückwand des Garraumes, die eine der Seitenwände des Garraumes beziehungsweise der Garraummuffel darstellt, ist im unteren Bereich eine Überlauföffnung 12 vorgesehen. An die Überlauföffnung 12 schließt sich eine Überlaufleitung 23 an, die in einen Überlaufablauf 26 übergeht. Der Überlaufablauf 26 endet in einer Kammer eines Wassertanks 22. Von dem Wassertank 22 geht ein Entlüftungsrohr 24 nach außen. Über das Entlüftungsrohr 24 kann ein Überdruck in dem Wassertank 22 zumindest teilweise ausgeglichen werden. Zudem ist an dem Wassertankraum 27, in dem der Wassertank 22 vorgesehen ist, ein Dampfkamin 3 vorgesehen, über den Dampf aus dem Dampfgargerät 1 austreten kann.

Soll in dem Garraum 10 Dampf erzeugt werden, so muss der Garraum 10 abgeschlossen sein. In diesem Zustand wird das Dampfventil 13 an dem Garraum 10 geschlossen. In diesem Zustand kann Dampf dann nur über die Überlauföffnung 12 aus dem Garraum 10 entweichen. Hierbei muss der Überdruck in dem Garraum 10 groß genug sein, um den Gegendruck des Wassers in dem Wassertank 22 zu überwinden. Von dem Wassertank 22 gelangt der Dampf dann in den Raum des Wassertanks 22 und verlässt diesen über den Dampfkamin 3.

In dem Zustand, in dem ohne Dampf gegart werden soll, oder zur Erneuerung der Luft in dem Garraum 10 erfolgt bei der dargestellten Ausführungsform des Gargerätes 1 nach dem Stand der Technik die Frischluftzufuhr über eine Öffnung (nicht gezeigt) in der Metallplatte des Dampfventils 13 und gegebenenfalls zusätzlich durch Anheben der Metallplatte.

In Figur 2 ist eine Ausführungsform des erfindungsgemäßen Dampfgargerätes 1 gezeigt.

Das Dampfgargerät 1 umfasst einen Garraum 10, der in der Regel von einer Garraummuffel gebildet wird und an der Vorderseite durch eine Türe (nicht gezeigt) verschlossen ist. An dem Boden des Garraums 10 ist eine Wasserablauföffnung 11 vorgesehen, über die über ein Ablaufrohr 20 Kondenswasser aus dem Garraum 10 in einen Auffangbehälter 21 gelangen kann. Von dem Auffangbehälter kann das Kondenswasser über den Abwasserauslass 25 aus dem Dampfgargerät 1 abgeleitet werden. Über den Abwasserauslass 25 kann auch gegebenenfalls übergelaufenes Wasser, das durch die Überlauföffnung 12, wie später beschrieben wird, in einen Wassertank 22 gelangt, aus dem Dampfgargerät 1 abgeleitet werden.

Im rückwärtigen Bereich des Garraums 10 ist ein Luftleitblech 15 vorgesehen, durch das ein Lüfterraum 16 abgetrennt wird. In dem Lüfterraum 16 ist ein Lüfter 14 angeordnet.

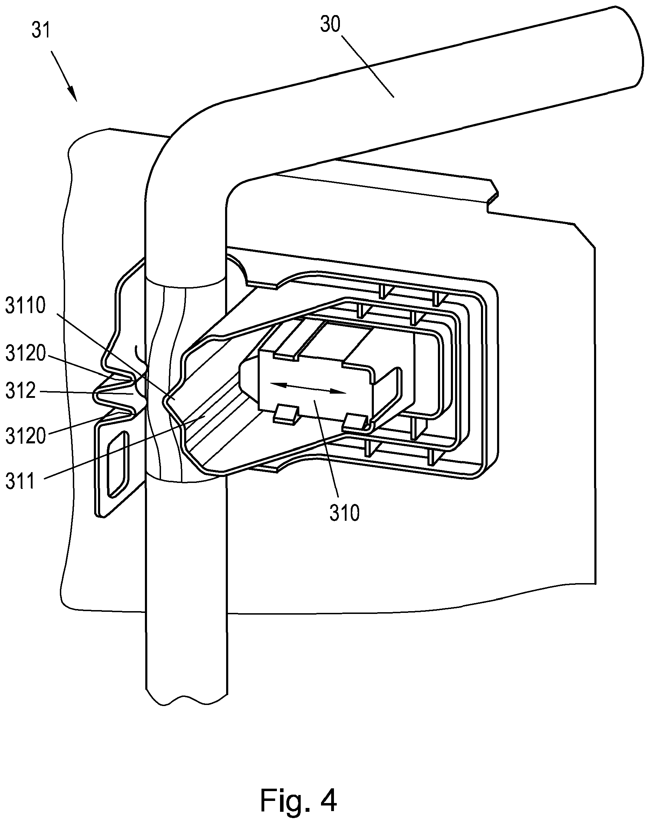

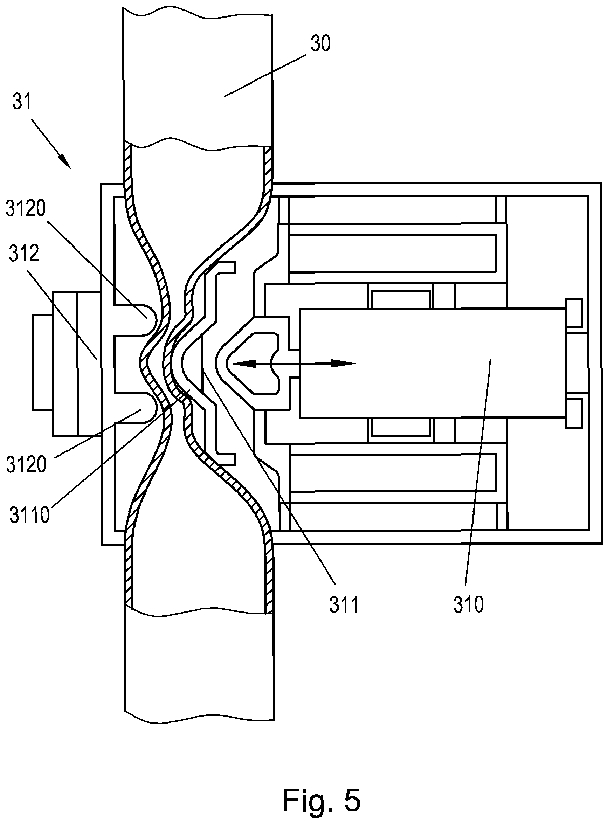

In der Rückwand des Garraums 10 ist im unteren Bereich eine Überlauföffnung 12 vorgesehen. An die Überlauföffnung 12 schließt sich eine Überlaufleitung 23 an. Die Überlaufleitung 23 verzweigt sich. Insbesondere geht die Überlaufleitung 23 in einen Überlaufablauf 26 und ein Dampfablassrohr 30 über. Der nach unten gerichtete Überlaufablauf 26 endet in einer Kammer eines Wassertanks 22. Von dem Wassertank 22 geht ein Entlüftungsrohr 24 nach außen. Über das Entlüftungsrohr 24 kann ein Überdruck in dem Wassertank 22 zumindest teilweise ausgeglichen werden. Allerdings ist bei dem erfindungsgemäßen Aufbau des Dampfgargerätes 1 kein Dampfkamin 3 an dem Raum des Wassertanks 22 vorgesehen. Stattdessen wird Dampf, der aus dem Garraum 10 entweicht, über die Verzweigung in der Überlaufleitung 23 in das Dampfablassrohr 30 gelangen. Das Dampfablassrohr 30 erstreckt sich von der Verzweigung aus nach oben. An dem Dampfablassrohr 30 ist ein Dampfventil 31 vorgesehen. Das Dampfventil 31 ist in Figur 2 nur schematisch dargestellt und wird unter Bezugnahme auf die Figuren 4 und 5 später genauer erläutert. Weiterhin ist an der Oberseite des Garraums 10 eine Belüftungsvorrichtung in Form eines Belüftungsventils 40, das auch als Frischluftventil bezeichnet wird, vorgesehen. Das Belüftungsventil 40 und das Dampfventil 31 sind mit einer Steuerung 5 verbunden, über die die beiden Ventile 31, 40 angesteuert werden können.

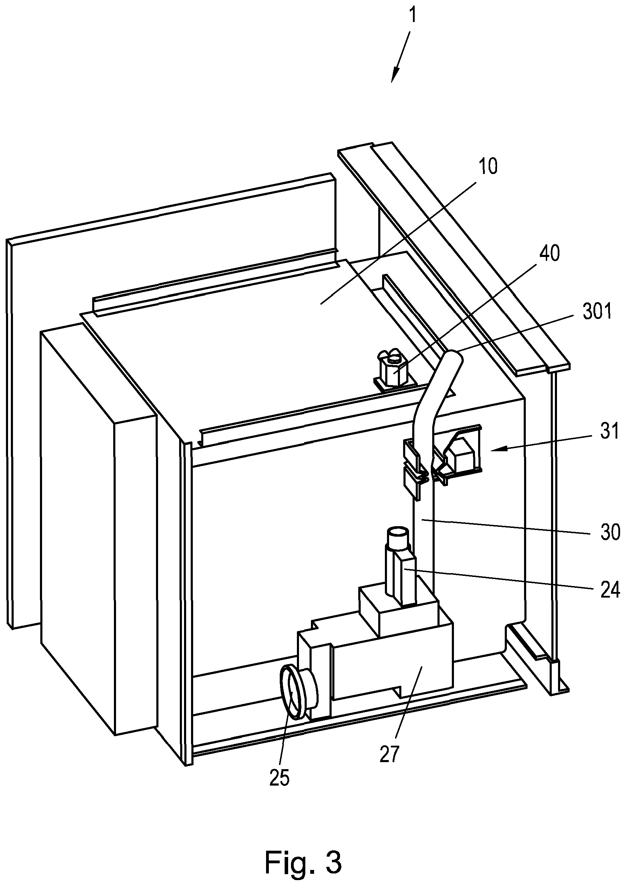

In der Figur 3 ist eine schematische, perspektivische Rückansicht einer Ausführungsform des Dampfgargerätes 1 gezeigt. In der Ansicht sind eine obere Gehäuseabdeckung und eine Rückwand ausgespart, um den Einblick auf die Oberseite und Rückseite des Garraumes 10 zu ermöglichen. Auf der Oberseite des Garraumes 10 ist ein Belüftungsventil 40 vorgesehen, das eine darunterliegende Belüftungsöffnung 17 (siehe Figur 2) abdeckt. Entlang der Rückseite des Garraumes 10 erstreckt sich das Dampfablassrohr 30. Dieses läuft von der Verzweigung der Überlaufleitung (nicht sichtbar) nach oben und ist an der Oberkante der Rückseite abgewinkelt, so dass das Austrittsende 301 im Bereich oberhalb des Garraumes 10 liegt. Im oberen Bereich der Rückwand des Garraumes ist an der Rückwand ein Dampfventil 31 befestigt. Dieses ist so angeordnet, dass parallel zu der Rückwand des Garraumes eine Kraft auf einen Schlauchbereich des Dampfablassrohres 30 ausgeübt werden kann.

Soll in dem Garraum 10 mit Dampf gegart werden, wird das Dampfventil 31 verschlossen. Wird hingegen Frischluft in dem Garraum 10 benötigt, so kann diese über das Belüftungsventil 40 in den Garraum 10 geleitet werden. In diesem Zustand wird vorzugsweise auch das Dampfventil 31 geöffnet, so dass die Luft in dem Garraum 10 zirkulieren kann.

Eine Ausführungsform eines Dampfventils 31 ist in Figur 4 schematisch gezeigt. Das Dampfablassrohr 30 besteht in dem Bereich, in dem das Dampfventil 31 auf dieses einwirkt, aus einem verformbaren Schlauch, insbesondere einem Silikonschlauch. Das Dampfventil 31 besteht in der dargestellten Ausführungsform aus zwei Ventilprofilen 311, 312. Das eine Ventilprofil 311 stellt eine Platte mit einer daran ausgebildeten Profilnase 3110 dar. Das Ventilprofil 311 ist so angeordnet, dass die Profilnase 3110 in Richtung des Dampfablassrohres 30 gerichtet ist. Das weitere Ventilprofil 312, das auch als Gegenprofil bezeichnet wird, umfasst in der dargestellten Ausführungsform ebenfalls eine Platte, von der sich zwei beabstandete Profilrippen 3120 erstrecken. Das Ventilprofil 312 ist so angeordnet, dass die Profilrippen 3120 zu dem Dampfablassrohr 30 gerichtet sind. Zudem ist das Ventilprofil 312 so angeordnet, dass die Profilnase 3110 des ersten Ventilprofils 311 in einer Höhe liegt, die zwischen den parallelen Profilrippen 3120 liegt. Weiterhin umfasst das Dampfventil 31 einen Aktuator 310. Dieser stellt einen Thermoaktuator dar. Durch Temperaturerhöhung wird in dem Aktuator beispielsweise Wachs oder ein anderes Material ausgedehnt und führt dadurch zu einem Verschieben des Ventilprofils 311 in Richtung auf das Dampfablassrohr 30. In dem vollständig ausgedehnten Zustand des Aktuators 310, der in Figur 5 schematisch gezeigt ist, wird durch die Profilnase 3110, die zwischen die Profilrippen 3120 ragt, das Dampfablassrohr 30 zusammengedrückt und dadurch vollständig verschlossen.

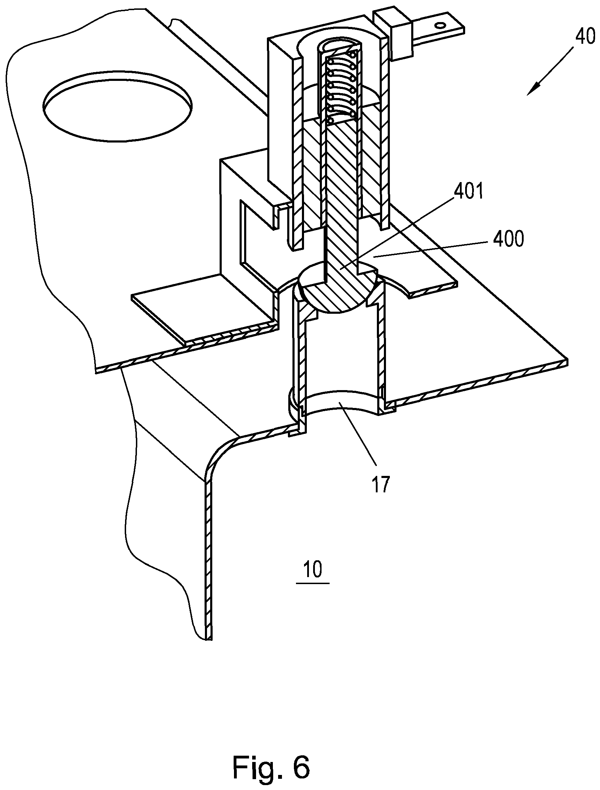

In Figur 6 ist eine Ausführungsform des Belüftungsventils 40 schematisch gezeigt. Das Belüftungsventil 40 sitzt auf der Belüftungsöffnung 17 des Garraums 10 auf. In dem Belüftungsventil 40 ist ein Ventilstößel 401 vorgesehen, der in vertikaler Richtung bewegt werden kann. In der in Figur 6 gezeigten Ausführungsform befindet sich das Belüftungsventil 40 in der geschlossenen Stellung. Der Ventilstößel 401 sitzt hierbei auf dem Ventilsitz auf und verschließt so das Belüftungsventil 40. Wird der Ventilstößel 401 nach oben bewegt, werden dadurch Zuluftöffnungen 400, die über den Rand Umfang des Belüftungsventils 40 eingebracht sind, freigegeben. Über diese Zuluftöffnugen 400 kann dann Frischluft in den Garraum 10 eintreten.

Die vorliegende Erfindung ist nicht auf die dargestellte Ausführungsformen beschränkt. Beispielsweise kann der Aufbau des Dampfventils von der gezeigten Ausführungsform abweichen. Kern der Erfindung ist es, dass das Dampfventil zu dem Garraum des Dampfgargerätes beabstandet ist und in einem mit der Überlauföffnung verbundenen Dampfablassrohr vorgesehen ist. Zudem muss das Dampfventil so ausgestaltet sein, dass das Öffnen und Schließen gesteuert werden kann, das heißt das der Dampfstrom durch das Dampfablassrohr gezielt eingestellt und insbesondere geregelt werden kann.

Mit der vorliegenden Erfindung wird das Konzept des Vorsehens eines Dampfventils an einem Dampfgargerät vereinfacht, indem das Dampfventil mit einer notwendigen, ohnehin vorzusehenden Überlauföffnung, die auch als Evakuierungsöffnung bezeichnet wird, kombiniert wird. Zudem wird die Verwendung eines durch einen von außen quetschbaren Schlauches als Dampfventil realisiert.

Die vorliegende Erfindung weist eine Reihe von Vorteilen auf. Der Hauptvorteil besteht in der Vereinfachung der Herstellung des Dampfofengarraums, indem eine Öffnung für kombinierte Funktionen, nämlich der Dampfevakuierung und dem Wasserablauf zur Verfügung gestellt beziehungsweise verwendet wird. Zudem kann die Herstellung kostengünstig erfolgen. Wenn der Einlass von Frischluft und der Auslass von Dampf beziehungsweise Heißluft unterschiedlich sind, wird bei dem erfindungsgemäßen Dampfgargerät durch die bevorzugte Anordnung eines Dampfventils und eines Belüftungsventils eine optimale Luftzirkulation erzeugt.

### Bezugszeichenliste

- 1: Dampfgargerät
- 10: Garraum
- 11: Wasserablauföffnung
- 12: Überlauföffnung
- 13: Metallplatte (Stand der Technik)
- 14: Lüfter
- 15: Luftleitblech
- 16: Lüfterraum
- 17: Belüftungsöffnung
- 20: Ablaufrohr
- 21: Auffangbehälter
- 22: Wassertank
- 23: Überlaufleitung
- 24: Entlüftungsrohr
- 25: Abwasserauslass
- 26: Überlaufablauf
- 27: Wassertankraum
- 3: Dampfkamin
- 30: Dampfablassrohr
- 301: Austrittsende
- 31: Dampfventil
- 310: Aktuator
- 311: Ventilprofil
- 3110: Profilnase
- 312: Ventilprofil
- 3120: Profilrippen
- 40: Belüftungsventil
- 400: Zuluftöffnung
- 401: Ventilstößel
- 5: Steuerung

## Patentansprüche

1. Dampfgargerät, insbesondere Dampfbackofen, mit einem Garraum (10), der in mindestens einer der Seitenwände mindestens eine Überlauföffnung (12) aufweist, **dadurch gekennzeichnet, dass** die Überlauföffnung (12) mit einer Überlaufleitung (23), die sich in einen Überlaufablauf (26) und ein Dampfablassrohr (30) verzweigt, verbunden ist und an dem Dampfablassrohr (30) mindestens ein Dampfventil (31) vorgesehen ist, mittels dessen zumindest zeitweise der Querschnitt des Dampfablassrohres (30) verändert werden kann.

2. Dampfgargerät nach Anspruch 1, **dadurch gekennzeichnet, dass** das Dampfventil (31) zu der Verzweigung der Überlaufleitung (23) in Überlaufablauf (26) und Dampfablassrohr (30) beabstandet ist.

3. Dampfgargerät nach einem der Ansprüche 1 oder 2, **dadurch gekennzeichnet, dass** das Dampfablassrohr (30) zumindest im Bereich des mindestens einen Dampfventils (31) durch einen Schlauch gebildet wird.

4. Dampfgargerät nach einem der Ansprüche 1 bis 3, **dadurch gekennzeichnet, dass** das Dampfventil (31) von außen auf das Dampfablassrohr (30) wirkt.

5. Dampfgargerät nach einem der Ansprüche 1 bis 4, **dadurch gekennzeichnet, dass** das Dampfventil (31) ein Stellglied (310), insbesondere einen elektromagnetischen Aktuator oder einen Thermoaktuator umfasst.

6. Dampfgargerät nach einem der Ansprüche 1 bis 5, **dadurch gekennzeichnet, dass** an dem Garraum (10) mindestens ein Belüftungsventil (40) angeordnet ist, das zu der Überlauföffnung (12) beabstandet ist.

7. Dampfgargerät nach einem der Ansprüche 1 bis 6, **dadurch gekennzeichnet, dass** der Überlaufablauf (26) in einem Wassertank (22) endet.

8. Dampfgargerät nach einem der Ansprüche 1 bis 7, **dadurch gekennzeichnet, dass** das Dampfventil (31) und das Belüftungsventil (40) mit einer Steuereinheit (5) verbunden sind.

## Claims

1. Steam cooking appliance, in particular a steam oven, having a cooking space (10), which has at least one overflow opening (12) in at least one of the side walls, **characterised in that** the overflow opening (12) is connected to an overflow line (23), which branches into an overflow drain (26) and a steam exhaust tube (30) and at least one steam valve (31) is provided on the steam exhaust tube (30), by means of which the cross section of the steam exhaust tube (30) can be changed at least temporarily.

2. Steam cooking appliance according to claim 1, **characterised in that** the steam valve (31) is at a distance from the branching point of the overflow line (23) into overflow drain (26) and steam exhaust tube (30).

3. Steam cooking appliance according to one of claims 1 or 2, **characterised in that** the steam exhaust tube (30) is formed by a hose at least in the region of the at least one steam valve (31).

4. Steam cooking appliance according to one of claims 1 to 3, **characterised in that** the steam valve (31) acts on the steam exhaust tube (30) from the outside.

5. Steam cooking appliance according to one of claims 1 to 4, **characterised in that** the steam valve (31) comprises a control element (310), in particular an electromagnetic actuator or a thermoactuator.

6. Steam cooking appliance according to one of claims 1 to 5, **characterised in that** at least one ventilation valve (40) is disposed on the cooking space (10), being at a distance from the overflow opening (12).

7. Steam cooking appliance according to one of claims 1 to 6, **characterised in that** the overflow drain (26) ends in a water tank (22).

8. Steam cooking appliance according to one of claims 1 to 7, **characterised in that** the steam valve (31) and the ventilation valve (40) are connected to a control unit (5).

## Revendications

1. Appareil de cuisson à la vapeur, en particulier four à vapeur, avec un espace de cuisson (10) qui présente dans au moins une des parois latérales au moins un orifice de trop-plein (12), **caractérisé en ce que** l'orifice de trop-plein (12) est relié à une conduite de trop-plein (23) qui se ramifie en une évacuation de trop-plein (26) et un tuyau de vidange de vapeur (30) et au moins une soupape de vapeur (31) est prévue sur le tuyau de vidange de vapeur (30), au moyen de laquelle la section du tuyau de vidange de vapeur (30) peut être modifiée au moins temporairement.

2. Appareil de cuisson à la vapeur selon la revendication 1, **caractérisé en ce que** la soupape de vapeur (31) est placée à l'écart de la ramification de la conduite de trop-plein (23) en une évacuation de trop-plein (26) et un tuyau de vidange de vapeur (30).

3. Appareil de cuisson à la vapeur selon l'une des revendications 1 ou 2, **caractérisé en ce que** le tuyau de vidange de vapeur (30) est constitué par un flexible au moins dans la zone de l'au moins une soupape de vapeur (31).

4. Appareil de cuisson à la vapeur selon l'une des revendications 1 à 3, **caractérisé en ce que** la soupape de vapeur (31) agit de l'extérieur sur le tuyau de vidange de vapeur (30).

5. Appareil de cuisson à la vapeur selon l'une des revendications 1 à 4, **caractérisé en ce que** la soupape de vapeur (31) englobe un actionneur (310), en particulier un actionneur électromagnétique ou un thermoactionneur.

6. Appareil de cuisson à la vapeur selon l'une des revendications 1 à 5, **caractérisé en ce qu'**au moins une soupape de ventilation (40) est disposée sur l'espace de cuisson (10), laquelle est placée à l'écart de l'orifice de trop-plein (12).

7. Appareil de cuisson à la vapeur selon l'une des revendications 1 à 6, **caractérisé en ce que** l'évacuation de trop-plein (26) débouche dans un réservoir à eau (22).

8. Appareil de cuisson à la vapeur selon l'une des revendications 1 à 7, **caractérisé en ce que** la soupape de vapeur (31) et la soupape de ventilation (40) sont reliées à une unité de commande (5).
